# EUROPEAN PATENT SPECIFICATION

(11) **EP 1 550 350 B1**
(45) Date of publication and mention of the grant of the patent: **30.07.2008**
(21) Application number: 03753342.9
(22) Date of filing: 09.10.2003
(51) Int. Cl.: H04R 25/00, H04B 5/00

(54) **TELELOOP SYSTEM**
TELELOOP-SYSTEM
SYSTEME DE BOUCLE D'INDUCTION

(30) Priority: 09.10.2002 DK 200201523
(43) Date of publication of application: 06.07.2005
(73) Proprietor: Estron A/S, 8653 Them (DK)
(72) Inventor: SORRIG, Allan, DK-8680 Ry (DK)
(74) Representative: Sundien, Thomas
(86) International application number: PCT/DK2003/000682
(87) International publication number: WO 2004/034738

(56) References cited:
- EP-A- 1 250 026
- WO-A-00/31891
- US-A- 5 164 707
- US-A- 5 812 598
- US-B1- 6 208 740

## Description

### FIELD OF THE INVENTION

The invention relates to a teleloop system for receiving an audio signal and representing said audio signal by an electromagnetic signal to a listener using a hearing aid with a telecoil, wherein the system is adapted for representing an audio signal comprising a first and a second audio channel.

### BACKGROUND OF THE INVENTION

A conventional hearing aid or listening device can include both a microphone and a telecoil. The microphone picks up acoustic sound waves and converts the acoustic sound waves to an electrical signal. This signal is then processed (e.g., amplified) and sent to the speaker (or "receiver") of the hearing aid. The speaker then converts the amplified signal to an acoustic signal, which is broadcasted towards the eardrum.

The telecoil, however, also picks up electromagnetic signals. The telecoil for a hearing aid is a small electromagnetic induction coil, such as a wire wound around a magnetic bobbin. The telecoil produces a voltage over its terminals when placed within an electromagnetic field, which is created by an alternating current of an audio signal moving through a wire. When the telecoil is placed near the wire carrying the current of the audio signal, an equivalent audio signal is induced in the telecoil. The signal in the telecoil is then amplified and sent to the speaker (or "receiver") of the hearing aid for conversion to an acoustic signal.

Teleloops are well known assisting listening devices used for generating an electromagnetic signal, which can be picked up by a telecoil in a hearing aid worn by a hearing impaired listener or by a tele-receiver. Teleloops are both used in public facilities, such as churches, railway stations and the like, but also as assisting devices in homes.

A typical teleloop system comprises a teleloop cable and an amplifier adapted to amplify an input signal from a microphone or a playback device. The purpose of the amplifier is to make a suitable amplification of the signal supplied to the amplifier in order to generate a magnetic field of a magnitude sufficient for the receivers, e. g. the telecoil in the hearing aid, to sense this signal and process this further for output to the user. If a hearing aid with a telecoil is placed near a teleloop, an alternating current in the teleloop creates an electromagnetic field being induced in the telecoil. The signal of the telecoil is amplified and sent to the speaker of the hearing aid. Thus, the listener receives the audio signal without any background audio noise.

In prior art, a single teleloop is often used for representing the sound, and therefore these known teleloops are only capable of reproducing one sound channel, whereby a hearing impaired listener using a teleloop will not be capable of experiencing sound having two sound channels such as stereo sound.

In US 6208740 a stereophonic magnetic induction sound system is described, which has two magnetic induction transmitters comprising antennas for transmitting individual signals to two ear pieces each having an inductive pick-up coil. The antennas are positioned around the neck of the user in order to restrict movement of the antennas relative to the neck. In the document it is described that the transmitter does not need to be worn by the user, but the pick-up coils in the ear pieces should be maintained substantially perpendicular to the magnetic fields generated by the antennas in order to obtain a clear and uninterrupted reception of the audio. It is therefore a disadvantage of the system that the user will have to keep his head in a constant position relative to the antennas in order to obtain an uninterrupted reception of the audio. A further disadvantage is that, because of the relatively large distance between the antennas and the earpieces, it will be necessary to generate a strong electromagnetic field to ensure that the field is received and induced in the inductive pick-up coils in the ear pieces. This strong magnetic field could therefore also be received by the other inductive pick-up coil, which would interfere with the stereo effect.

Further, a microphone is normally placed near the sound source to receive the sound, which is to be played back for the listener through the teleloop. This makes the system very sensible to noise coming from the surroundings, and especially in teleloop systems where a large amplification of the sound signal is necessary, the amplified noise from the surroundings decreases the quality of the sound experience considerably.

### OBJECT AND SUMMARY OF THE INVENTION

It is an object of the invention to provide a teleloop system solving the above-mentioned problem.

This is obtained by a teleloop system for representing an audio signal by an electromagnetic signal to a listener using a hearing aid with a telecoil, wherein the teleloop system is adapted for representing an audio signal comprising a first and a second audio channel. The system comprises a first teleloop for representing said first channel of said audio signal, said first teleloop is adapted to be mounted in a position near the left ear of the listener and designed such that the electromagnetic field from said first teleloop is generated in a limited area near the left ear so that the energy induced in the telecoil in the receiving unit at the left ear is mainly due to the electromagnetic field from said first teleloop. The system comprises a second teleloop for representing said second channel of said audio signal, said second teleloop is adapted to be mounted in a position near the right ear of the listener and designed such that the electromagnetic field from said second teleloop is generated in a limited area near the right ear so that the energy induced in the telecoil in the receiving unit at the right ear is mainly due to the electromagnetic field from said second teleloop. The first and the second teleloop are adapted to be mounted on inventory surrounding the listener, whereby the first and the second teleloop are not in direct or indirect contact with the listener during use, and said first and second teleloop have a shape and a size whereby the electromagnetic signal from the first teleloop and the second teleloop to respectively the left and right ear is available within an area enabling the listener to move within said area and still receive the first and second audio channel.

Thereby a teleloop system, which can reproduce a stereo audio signal, is obtained, whereby a listener using a hearing aid with a telecoil can receive a stereo audio signal and experience stereo via a teleloop system. The teleloops are mounted on inventory surrounding the listener and not placed directly on the user, e.g. via a headset, since wearing a headset is very unpleasant for the hearing disabled user, who has already a hearing aid inside the ear. A further advantage of the teleloop system is that the user will not have to wear any extra gear when using the system. Further, because of the shape and size of each teleloop it is possible for the listener to move the head without experiencing fallouts in the audio interception. Because of the optimised design of the teleloops enabling an optimised transfer of energy from the teleloops to the telecoils, the electromagnetic signal can be held at a low level, which minimises the risk of one telecoil receiving electromagnetic signals from both teleloops.

In a specific embodiment, the first and the second teleloop comprise fastening means for fastening the first and the second teleloop to inventory surrounding the listener. This ensures that the teleloops can easily be removed and placed in other positions, which means that they can be placed in positions, which are optimal for the specific listener. Thus, the first and the second teleloops can be placed properly ensuring that the electromagnetic signal from the first teleloop to the left ear is maximised, and the electromagnetic signal from the first teleloop to the right ear is minimised. Further, the electromagnetic signal from the second teleloop to the right ear is maximised, and the electromagnetic signal from the second teleloop to the left ear is minimised.

In an advantageous embodiment, the first and the second teleloop are mounted at a neck rest of a seat, such as a car seat, said first teleloop being mounted in a position near the left ear of the listener in such a way that the electromagnetic signal from the first teleloop to the left ear is maximised, and the electromagnetic signal from the first teleloop to the right ear is minimised, and said second teleloop is mounted in a position near the right ear of the listener in such a way that the electromagnetic signal from the second teleloop to the right ear is maximised, and the electromagnetic signal from the second teleloop to the left ear is minimised. The neck rest of a chair is close to the ears of the listener sitting in the chair, and therefore the ears of the listener are close to the teleloops. The teleloops could either be placed on the chair, or they could be placed inside the chair as a part of the chair. A further advantage of placing the teleloops in the neck rest is that it forces the listener to adjust the neck rest in order to get the optimal electromagnetic signal from each teleloop. This has the side effect that the neck rest is always placed in a proper position for supporting the neck of the listener optimally.

In a specific embodiment, the system further comprises a connector box, said connector box comprising an output to be electronically connected to said first and second teleloop, whereby an electronic signal representing an audio signal can be transferred between the connector box and said first and second teleloop and a number of inputs, each input to be electronically connected to an audio playback device, whereby an electronic signal representing an audio signal can be transferred between the audio playback device and said connector box. Thereby a number of playback devices can be electronically connected to the teleloops, and the listener can receive a clean audio signal, which is not mixed with noise from the surroundings. This signal can be received from all playback devices connected to the connector box, either at the same time or by switching means, making it possible to select a playback device. The switching means could be a switch on the connector box, or it could be means controllable by a remote control.

In another embodiment, the connector box comprises a filter for filtering the electronic signal to be transferred between the connector box and the first and second teleloop. When a connector box is connected to numerous electronic devices, low frequency noise appears, and such noise is of great disturbance to a teleloop listener. Therefore, a filter is necessary in order to improve the teleloop signal.

In a specific embodiment, the connector box further comprises means for independently amplifying the signal amplitude of each electronic signal transferred between a playback device and the connector box. Thereby the signal received and played back by the teleloops can be optimised for teleloops. At the same time further different levels of sound received from each playback device can be amplified to the same level ensuring that the teleloop listener receives the same level from all devices.

In an embodiment, the connector box further comprises an input for receiving an electronic signal from a microphone. Thereby other people can communicate with the listener through the teleloop using the microphone.

### BRIEF DESCRIPTION OF THE DRAWINGS

In the following, preferred embodiments of the invention will be described referring to the figures, wherein
figure 1 illustrates a teleloop system according to the present invention,
figure 2 illustrates another embodiment of a teleloop system according to the present invention,
figure 3 illustrates a teleloop system, which can be mounted on a neck rest,
figure 4 illustrates a teleloop system mounted on a chair,
figure 5 illustrates a teleloop system, which can be mounted on a neck rest,
figure 6 illustrates a teleloop system, which can be mounted on a neck rest of a car seat,
figure 7 illustrates a teleloop system with a connector box,
figure 8 illustrates the elements comprised in a connector box.

### DESCRIPTION OF PREFERRED EMBODIMENTS

The general concept of the idea is to use a separate teleloop for each channel in a stereo audio signal. Each teleloop is positioned near the ears of the listener wearing a hearing aid comprising a telecoil in each ear. Each teleloop generates an electromagnetic field, and the energy in this field is induced in the telecoil, and a transducer in the hearing aid plays back the audio channel based on the induced energy.

The telecoil in the first ear should mainly induce energy of the electromagnetic magnetic field from a first teleloop, and the telecoil in the second ear should mainly induce energy of the electromagnetic magnetic field from a second teleloop. At least the energy induced in the second telecoil from the first teleloop and in the first telecoil from second teleloop should be minimised to avoid decreasing the quality of the stereo audio signal.

This is obtained by designing the teleloops such that the electromagnetic field from one teleloop is generated in a limited area near one of the two telecoils or ears. The field should be generated in a limited area to make it possible for the listener to move the head without loosing the perception of the audio transferred by the electromagnetic field. Further, by designing the teleloops in a way ensuring that a maximum amount of the energy in the electromagnetic field is induced in the intended telecoil, the amount of energy in the field can be smaller, whereby the risk of the opposite coil inducing energy is smaller.

In the following the amount of energy from an electromagnetic field generated by a teleloop, which is or will be induced in a telecoil in the hearing aid placed in the ears of a listener, will also be referred to as an electromagnetic signal.

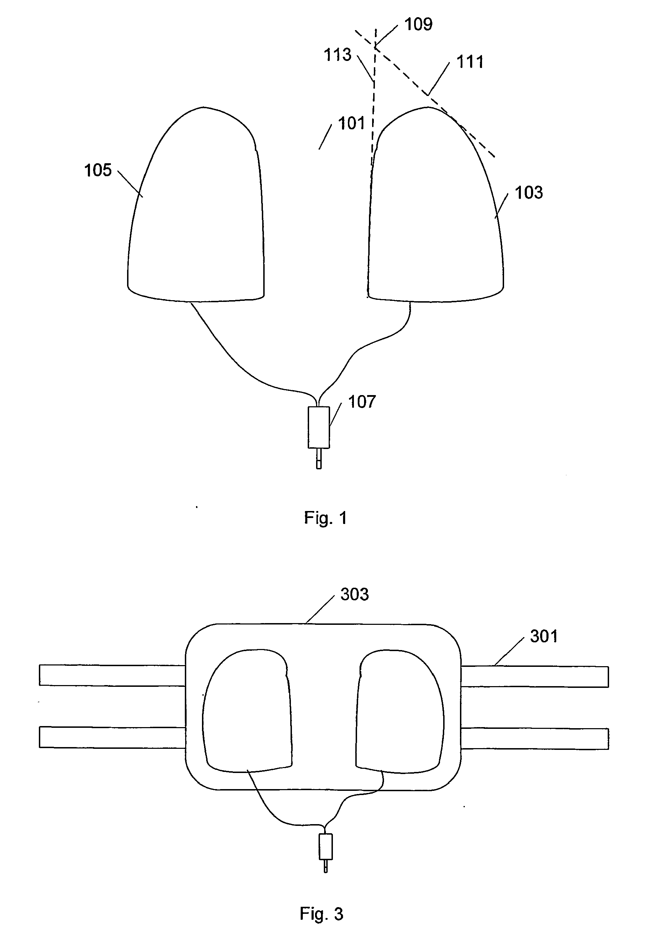

In figure 1, an embodiment of a teleloop system 101 according to the present invention is illustrated. The teleloop system comprises a first teleloop 103 and a second teleloop 105. In an embodiment, the illustrated teleloop can be used for stereo audio having two audio channels, where the first teleloop 103 is used for one audio channel, and the second teleloop 105 is used for the other audio channel. Each teleloop in the teleloop system 101 is adapted to receive an audio channel, which e.g. could be received via a jack connector 107. When using the teleloop, the first teleloop 103 is placed in a position near the left ear of the listener, and the second teleloop 105 is placed near the right ear of the listener. The positioning of the first teleloop 103 should be made in such a way that the electromagnetic signal from the first teleloop 103 to the left ear is maximised, and the electromagnetic signal from the first teleloop 103 to the right ear is minimised. Further, the second teleloop 105 should be placed in such a way that the electromagnetic signal from the second teleloop 105 to the right ear is maximised, and the electromagnetic signal from the second teleloop 105 to the left ear is minimised.

When using the teleloop system it is important to obtain a separation of the electromagnetic field from each of the first and the second teleloop. This can be obtained as illustrated in figure 1 by ensuring that the shortest distance between the first and the second teleloop is maximised. In figure 1, this is obtained by making the sides of the teleloops flat, whereby an elongated form is obtained. Further, by making the top of the teleloops more sharp than the bottom, tests have shown that a maximised electromagnetic field can be obtained at a point 109. The maximised electromagnetic signal is obtained at the point 109, which can be determined as the cross point between a tangent 113 to the flat side and a tangent 111 to the top opposite side. Therefore, by ensuring that this point 109 is as close as possible to the telecoil in the ear of the listener, an optimised electromagnetic signal is received by the telecoil.

It is very important that the electromagnetic signal is optimised, because, compared to an audio signal, the effect in an electromagnetic signal decreases very fast when moving through air. Further, when the teleloops are made having a cone like form pointing towards the intended position of the listener's ears, tests have shown that the direction of the electromagnetic signal can be controlled.

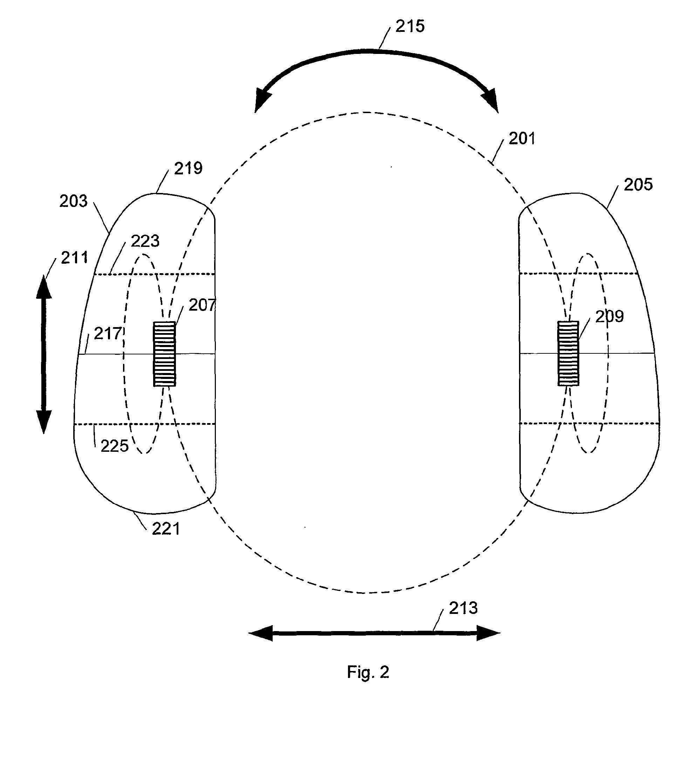

In figure 2 another embodiment of the teleloop system is illustrated. The head 201 of the listener is illustrated, where the teleloops 203 and 205 are placed behind the listener, and more specifically behind the telecoils 207 and 209 in the ears of the listener. When determining the design of the teleloops, it is of interest to design the teleloops in way ensuring that the listener can move the head 201 without interrupting the interception of audio or decreasing the quality of interception of the audio signal received via the electromagnetic signal from the teleloops at the telecoils. The movement performed by the listener includes movements vertically 211, horizontally 213 and tilting 215 the head to the left and to the right. In order to maximise the amount of energy transferred from the teleloops 203, 205 to the telecoils 207,209, the wires in the telecoil should be parallel to the wires in the teleloop. Further, the distance between the teleloop wires and the coils should be held below a maximum distance.

In the example the teleloops are designed having an elongated shape with a horizontal oriented wiring 217, thereby, when the head 201 is positioned as illustrated, the wires in the telecoil are parallel to the wiring 217, and the transferred energy is maximised. When the listener moves the head 201 in the vertical direction 211, then either the top 219 or the bottom 221 comprises an optimised horizontal wiring for transferring energy to the telecoil 207. If the distance between the top 219 and the horizontal wiring of the teleloop is of such a size that, when the telecoil is vertically placed in specific positions between the two parts, sufficient energy is not transferred, then the teleloop could comprise further horizontal wiring parts 223 and 225 to ensure that sufficient energy is transferred at all vertical positions.

Therefore, the vertical length of the teleloop limits the range of vertical positions in which the telecoil, and thereby the listener, can be positioned, and the number of horizontal wirings should be increased as the length increases.
In order to ensure that the listener is able to move the head horizontally 213, the teleloop should have a horizontal length, whereby the horizontal wiring has a specific length. Thereby, when the telecoils are horizontally displaced, the coils are maintained parallel to the horizontal wiring, ensuring that sufficient energy is transferred at all horizontal positions. The horizontal length of the teleloop limits the range of horizontal positions in which the telecoil, and thereby the listener, can be positioned.

Further, to ensure that the listener can tilt 215 the head 201 to the left and to the right, the teleloop could comprise wiring being inclined ensuring that the wiring at specific inclined positions is parallel to the wiring of the telecoil when the head is tilted. In the example this inclined wiring could be the top corners of the teleloops 203 and 205.

When designing the teleloops according to the above principles the telecoil can be optimised ensuring that the electromagnetic signal from teleloop to telecoil is maximised within a specific area, whereby the listener will be able to move the head without experiencing any loss in the received audio.

In figure 3, an example of a teleloop system is shown, which is prepared for being mounted on a neck rest of chair, such as a standard resting chair or a car seat. The first and the second teleloop are connected to two Velcro ribbons 301 via a piece of fabric 303. The teleloop system can then be mounted on the neck rest of the chair by placing and fastening the system around the neck rest using the Velcro ribbons 301.

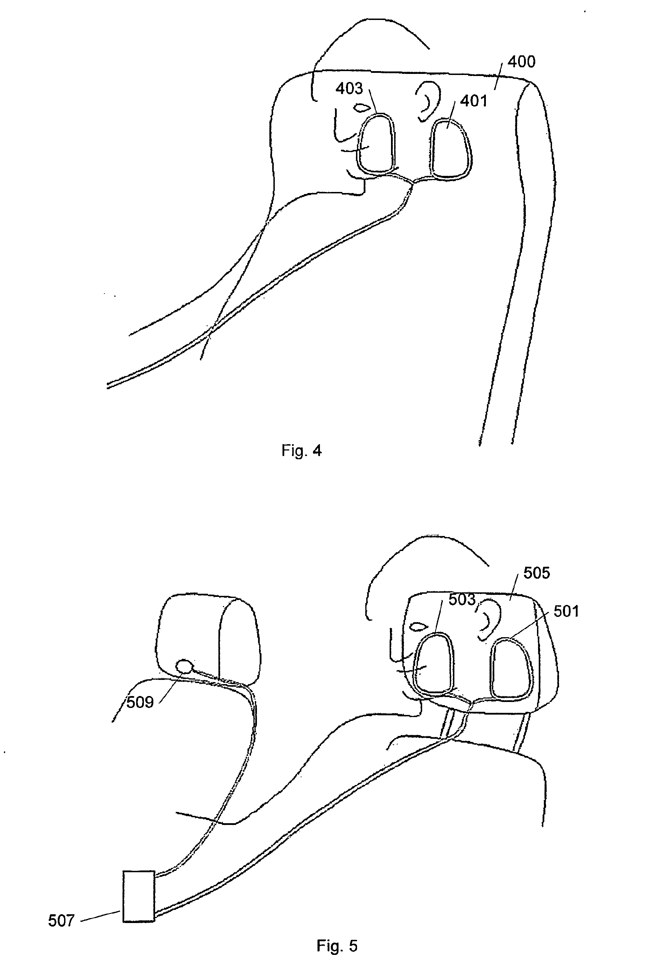

In figure 4, a teleloop system mounted on a chair 400 is illustrated. The first teleloop 403 and the second teleloop 405 are mounted in a position near the ears of the listener, whereby each ear receives the maximum electromagnetic signal from respectively the first teleloop 401 and the second teleloop 403 representing two audio channels in a stereo audio signal.

In a specific embodiment, as illustrated in figure 5, the first teleloop 501 and the second teleloop 403 in the teleloop system are mounted on a neck rest 505 of a car seat. The teleloops are electronically connected to a connector box 507, which could e.g. be placed under the car seat. In the illustrated example, a microphone 509 is mounted on the passenger seat. This microphone 509 is also connected to the connector box 507 such that passengers communicating to other passengers, who listen via teleloops, can then use the microphone.

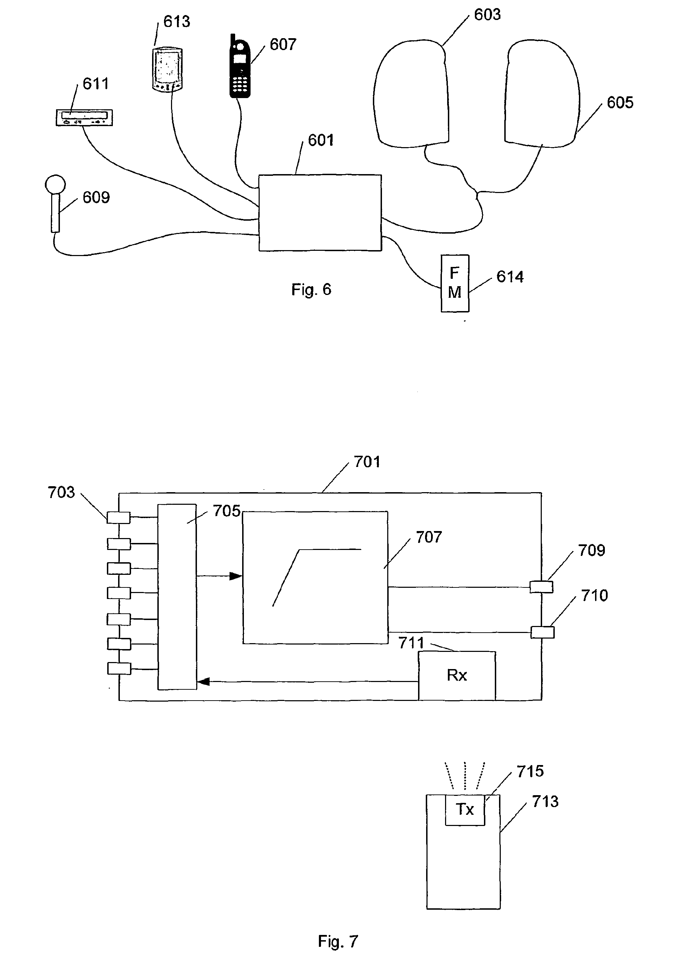

Figure 6 illustrates a teleloop system with a connector box 601 comprising an output, which is connected to the first teleloop 603 and to the second teleloop 605 and to a number of inputs, which are connected to a number of audio playback devices. The audio playback devices could be devices such as a CD player 611, a navigation system 613, a cellular phone 607 or a microphone 609. By using the teleloop system comprising a connector box, the electronic signal representing the audio signal from one of the playback devices can be transferred electronically to the teleloops and played back via electromagnetic signals e.g. representing each channel of a stereo audio signal. The connector box should then comprise means for shifting between the inputs, whereby it can be chosen, which input should be sent to the teleloops via the output. The switching means could e.g. be a switch on the connector box, or it could be a remote control, which can be used to switch to specific inputs. Alternatively, the switching could be performed automatically by detecting when there is a signal on an input, and then switching to the specific input on which the signal has been detected. The connector box could further be connected to a FM transmitter 614 for transmitting audio as FM signals to the hearing aid of the listener. In this case each audio channel should be transmitted with respectively a first and a second FM frequency, and the hearing aid in each ear of the listener should comprise receiver units each optimised for receiving one of the frequencies being different from the frequency received by the other receiver unit.

In figure 7, the elements comprised in a connector box 701 are illustrated. The connector box comprises a number of inputs 701 for receiving the electronic signal representing audio from the playback devices or microphones. Each input 703 is connected to an amplifier 705 amplifying the received electronic signal. This amplification is necessary because signals, which are to be reproduced by teleloops, have to be amplified more than when being reproduced by standard speakers. Again, this is necessary because the electromagnetic signal decreases faster than audio signals when being transmitted via air. The amplification of each input 703 connected to the connector box 701 could be performed independently towards the same level in order to ensure that the listener receives the same audio level from all connected devices. Alternatively, the electronic signal transmitted to the teleloops could be regulated to a specific value before being transferred via the output 709 to each of the teleloops. The box could further comprise a lineout output, e.g. to be connected to a FM transmitter transmitting each audio channel at a separate FM frequency.

The connector box 701 could further comprise a filter 707 for filtering the electronic signal representing the audio. This filter 707 could be a low pas filter being used to remove low frequency noise from the electronic signal. This noise could come from the other playback devices connected to the connector box. A teleloop is very sensitive to low frequency noise, and therefore low frequency noise can considerably decrease the sound quality received via teleloops.

The shifting means is here illustrated as a remote control 713, which transmits a control signal via a transmitter 715 to a receiver 711 in the connector box. The receiver 711 then controls the amplifier, which amplifies and transfers the selected input to the output via the filter.

## Claims

1. A teleloop system (101) for representing an audio signal by an electromagnetic signal to a listener using a hearing aid with a telecoil, wherein the teleloop system is adapted for representing an audio signal comprising a first and a second audio channel,
the system comprises a first teleloop (103) for representing said first channel of said audio signal, said first teleloop is adapted to be mounted in a position near the left ear of the listener and designed such that the electromagnetic field from said first teleloop is generated in a limited area near the left ear so that the energy induced in the telecoil in the receiving unit at the left ear is mainly due to the electromagnetic field from said first teleloop,
the system comprises a second teleloop (105) for representing said second channel of said audio signal, said second teleloop is adapted to be mounted in a position near the right ear of the listener and designed such that the electromagnetic field from said second teleloop is generated in a limited area near the right ear so that the energy induced in the telecoil in the receiving unit at the right ear is mainly due to the electromagnetic field from said second teleloop,
wherein the first and the second teleloop are adapted to be mounted on inventory surrounding the listener, whereby the first and the second teleloop are not in direct or indirect contact with the listener during use,
and wherein said first and second teleloop have a shape and a size, whereby the electromagnetic signal from the first teleloop and the second teleloop to respectively the left and right ear is made available within an area enabling the listener to move within said area and still receive the first and second audio channel.

2. A teleloop system according to claim 1, wherein the first and the second teleloop comprise fastening means for fastening the first and the second teleloop to inventory surrounding the listener.

3. A teleloop system according to claim 2, wherein the first and the second teleloop are mounted on a neck rest of a seat, such as a car seat, said first teleloop being mounted in a position near the left ear of the listener in such a way that the electromagnetic signal from the first teleloop to the left ear is maximised, and the electromagnetic signal from the first teleloop to the right ear is minimised, and said second teleloop is mounted in a position near the right ear of the listener in such a way that the electromagnetic signal from the second teleloop to the right ear is maximised, and the electromagnetic signal from the second teleloop to the left ear is minimised.

4. A teleloop system according to claim 1-3, wherein the system further comprises a connector box, said connector box comprising an output to be electronically connected to said first and second teleloop, whereby an electronic signal representing an audio signal can be transferred between the connector box and said first and second teleloop and a number of inputs, each input to be connected electronically to an audio playback device, whereby an electronic signal representing an audio signal can be transferred between the audio playback device and said connector box.

5. A teleloop system according to claim 4, wherein said connector box comprises a filter for filtering the electronic signal to be transferred between the connector box and the first and the second teleloop.

6. A teleloop system according to claim 4-5, wherein said connector box further comprises means for independently amplifying the signal amplitude of each electronic signal transferred between a playback device and the connector box.

7. A teleloop system according to claim 4-6, wherein said connector box further comprises an input for receiving an electronic signal from a microphone representing an audio signal.

## Patentansprüche

1. Teleschleifensystem (101) zur Darstellung
magnetisches Signal für einen Zuhörer, der einen Hörapparat mit einer Telespule verwendet, wobei das Teleschleifensystem dazu ausgelegt ist, ein Audiosignal darzustellen, welches einen ersten und einen zweiten Audiokanal aufweist,
das System eine erste Telefschleife (103) zur Darstellung des ersten Kanals des Audiosignals aufweist, wobei die erste Teleschleife ausgelegt ist, an einer Position nahe dem linken Ohr des Zuhörers angebracht zu werden und derart gestaltet ist, daß das elektromagnetische Feld von der ersten Teleschleife in einem begrenzten Bereich nahe des linken Ohres erzeugt wird, so daß die in der Telespule in der Aufnahmeeinheit an dem linken Ohr induzierte Energie im wesentlichen auf dem elektromagnetischen Feld von der ersten Teleschleife beruht,
das System eine zweite Teleschleife (105) zur Darstellung des zweiten Kanals des Audiosignals aufweist, wobei die zweite Teleschleife ausgelegt ist, an einer Position nahe dem rechten Ohr des Zuhörers angebracht zu sein und derart gestaltet ist, daß das elektromagnetische Feld von der zweite Teleschleife in einem begrenzten Bereich nahe des rechten Ohres erzeugt wird, so daß die in der Telespule in der Aufnahmeeinheit an dem rechten Ohr induzierte Energie hauptsächlich auf dem elektromagnetischen Feld der zweiten Teleschleife beruht,
wobei die erste und die zweite Teleschleife ausgelegt sind, an einer den Zuhörer umgebenden Ausstattung angebracht zu sein, wodurch die erste und die zweite Teleschleife bei Gebrauch nicht in direktem oder indirektem Kontakt mit dem Zuhörer sind,
und wobei die erste und die zweite Teleschleife eine Form und eine Größe haben, wodurch das elektromagnetische Signal von der ersten Teleschleife und der zweiten Teleschleife zu jeweils dem rechten und linken Ohr innerhalb eines Bereichs verfügbar gemacht wird, der es dem Zuhörer ermöglicht, sich innerhalb des Bereichs zu bewegen und dennoch den ersten und zweiten Audiokanal zu empfangen.

2. Teleschleifensystem nach Anspruch 1, bei dem die erste und die zweite Teleschleife eine Sicherungseinrichtung umfassen, um die erste und zweite Teleschleife an der den Zuhörer umgebenden Ausstattung zu sichern.

3. Teleschleifensystem nach Anspruch 2, wobei die erste und zweite Teleschleife an einer Nackenstütze eines Sitzes, wie etwa eines Autositzes angebracht sind, wobei die erste Teleschleife an einer Position nahe dem linken Ohr des Zuhörers in einer derartigen Weise angebracht ist, daß das elektromagnetische Signal von der ersten Teleschleife zu dem linken Ohr maximiert ist, und das elektromagnetische Signal von der ersten Teleschleife zu dem rechten Ohr minimiert ist, und die zweite Teleschleife an einer Position nahe des rechten Ohrs des Zuhörers derart angebracht ist, daß das elektromagnetische Signal von der zweiten Teleschleife zu dem rechten Ohr maximiert ist, und das elektromagnetische Signal von der zweiten Teleschleife zu dem linken Ohr minimiert ist.

4. Teleschleifensystem nach einem der Ansprüche 1 bis 3, bei dem das System weiter einen Anschlußkasten aufweist, wobei der Anschlußkasten einen Ausgang, der elektronisch mit der ersten und zweiten Teleschleife verbunden ist, wodurch ein ein Audiosignal darstellendes elektronisches Signal zwischen dem Anschlußkasten und der ersten und zweiten Teleschleife übertragen werden kann, und eine Anzahl von Eingängen aufweist, wobei jeder Eingang elektronisch mit einem Audiowiedergabegerät zu verbinden ist, wodurch ein ein Audiosignal darstellendes elektronisches Signal zwischen dem Audiowiedergabegerät und dem Anschlußkasten übertragen werden kann.

5. Teleschleifensystem nach Anspruch 4, bei dem der Anschlußkasten einen Filter zum Filtern des elektronischen Signals aufweist, das zwischen dem Anschlußkasten und der ersten und zweiten Teleschleife zu übertragen ist.

6. Teleschleifensystem nach Anspruch 4 oder 5, bei dem der Anschlußkasten weiter eine Einrichtung zur unabhängigen Verstärkung der Signalamplitude von jedem elektronischen Signal umfaßt, das zwischen einem Wiedergabegerät und dem Anschlußkasten übertragen wird.

7. Teleschleifensystem nach einem der Ansprüche 4 bis 6, bei dem der Anschlußkasten weiter einen Eingang zum Empfangen eines ein Audiosignal darstellenden elektronischen Signals von einem Mikrofon aufweist.

## Revendications

1. Système de boucles d'induction (101) pour représenter un signal audio par un signal électromagnétique à une personne qui écoute utilisant un appareil de correction auditive avec une bobine d'induction magnétique, dans lequel le système de boucles d'induction est adapté pour représenter un signal audio comprenant un premier canal audio et un second canal audio,
le système comprend une première boucle d'induction (103) pour représenter ledit premier canal dudit signal audio, ladite première boucle d'induction est adaptée pour être montée dans une position proche de l'oreille gauche de la personne qui écoute et est conçue de telle façon que le champ électromagnétique de ladite première boucle d'induction soit engendré dans une zone limitée près de l'oreille gauche de sorte que l'énergie induite dans la bobine d'induction magnétique dans l'unité de réception au niveau de l'oreille gauche est principalement due au champ électromagnétique de ladite première boucle d'induction,
le système comprend une seconde boucle d'induction (105) pour représenter ledit second canal dudit signal audio, ladite seconde boucle d'induction est adaptée pour être montée dans une position proche de l'oreille droite de la personne qui écoute et est conçue de telle façon que le champ électromagnétique de ladite seconde boucle d'induction soit engendré dans une zone limitée près de l'oreille droite de sorte que l'énergie induite dans la bobine d'induction magnétique dans l'unité de réception au niveau de l'oreille droite est principalement due au champ électromagnétique de ladite seconde boucle d'induction,
dans lequel les première et seconde boucles d'induction sont adaptées pour être montées sur un support entourant la personne qui écoute, grâce à quoi les première et seconde boucles d'induction ne sont pas en contact direct ou indirect avec la personne qui écoute durant l'utilisation,
et dans lequel lesdites première et seconde boucles d'induction ont une forme et une dimension, grâce à quoi le signal électromagnétique provenant de la première boucle d'induction et de la seconde boucle d'induction vers respectivement l'oreille gauche et l'oreille droite est rendu disponible dans une zone permettant à la personne qui écoute de se déplacer à l'intérieur de ladite zone et de recevoir encore les premier et second canaux audio.

2. Système de boucles d'induction selon la revendication 1, dans lequel la première boucle d'induction et la seconde boucle d'induction comprennent des moyens de fixation pour fixer les première et seconde boucles d'induction au support entourant la personne qui écoute.

3. Système de boucles d'induction selon la revendication 2, dans lequel la première boucle d'induction et la seconde boucle d'induction sont montées sur un appuie-tête d'un siège, tel qu'un siège de véhicule, ladite première boucle d'induction étant montée dans une position proche de l'oreille gauche de la personne qui écoute de telle manière que le signal électromagnétique provenant de la première boucle d'induction vers l'oreille gauche soit maximisé, et le signal électromagnétique provenant de la première boucle d'induction vers l'oreille droite soit minimisé, et ladite seconde boucle d'induction est montée dans une position proche de l'oreille droite de la personne qui écoute de telle manière que le signal électromagnétique provenant de la seconde boucle d'induction vers l'oreille droite soit maximisé, et le signal électromagnétique provenant de la seconde boucle d'induction vers l'oreille gauche soit minimisé.

4. Système de boucles d'induction selon la revendication 1-3, dans lequel le système comprend de plus un boîtier de raccordement, ledit boîtier de raccordement comprenant une sortie destinée à être reliée électroniquement auxdites première et seconde boucles d'induction, grâce à quoi un signal électronique représentant un signal audio peut être transféré entre le boîtier de raccordement et lesdites première et seconde boucles d'induction, et une pluralité d'entrées, chaque entrée étant destinée à être reliée électroniquement à un dispositif de lecture audio, grâce à quoi un signal électronique représentant un signal audio peut être transféré entre le dispositif de lecture audio et ledit boîtier de raccordement.

5. Système de boucles d'induction selon la revendication 4, dans lequel ledit boîtier de raccordement comprend un filtre pour filtrer le signal électronique destiné à être transféré entre le boîtier de raccordement et les première et seconde boucles d'induction.

6. Système de boucles d'induction selon la revendication 4-5, dans lequel ledit boîtier de raccordement comprend de plus des moyens pour amplifier de manière indépendante l'amplitude de chaque signal électronique transféré entre un dispositif de lecture et le boîtier de raccordement.

7. Système de boucles d'induction selon la revendication 4-6, dans lequel ledit boîtier de raccordement comprend de plus une entrée pour recevoir un signal électronique provenant d'un microphone représentant un signal audio.
